# EUROPEAN PATENT APPLICATION

(11) **EP 4 552 783 A1**
(43) Date of publication of application: **14.05.2025**
(21) Application number: 24209925.7
(22) Date of filing: 30.10.2024
(51) Int. Cl.: B23K 9/133

(54) **WELDING-TYPE SYSTEM COMPRISING A WIRE FEEDER WITH AUTOMATIC TENSIONING MECHANISM**

(30) Priority: 31.10.2023 US 202363546666 P; 24.10.2024 US 202418925388
(71) Applicant: Illinois Tool Works Inc., Glenview IL 60025 (US)
(72) Inventor: ULRY, Eric, Glenview, 60025 (US); RUMAO, Manuel, Glenview, 60025 (US)
(74) Representative: HGF

(57) **Abstract**

Systems and methods are provided for utilizing wire feeders with automatic tensioning mechanism. An example wire feeder, for use in welding-type systems, may include one or more wire feeding components configured to feed an electrode wire; and a wire tensioning mechanism configured to apply a tensioning force to the electrode wire during feeding of the electrode wire via the wire feeder. The wire tensioning mechanism may include at least one tensioning control component for enabling setting or adjusting the tensioning force, and may be configured to, after the tensioning force reaches a pre-set value, limit the setting or adjusting the tensioning force via the at least one tensioning control component to the pre-set value.

## Description

### CLAIM OF PRIORITY

This patent application claims priority to and claims benefit from United States Provisional Patent Application Serial No. 63/546,666, filed on October 31, 2023. The above identified application is hereby incorporated herein by reference in its entirety.

### BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

In some instances, conventional welding-type systems may have some limitations and/or disadvantages. For example, wire feeders used in some conventional welding-type systems may have limitations with respect to managing various parameters or functions associating with wire feeding during welding operations.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for utilizing wire feeders with automatic tensioning mechanism, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup that may be used for welding-type operations.
Fig. 2 shows an example welding-type wire feeding system, in accordance with aspects of this disclosure.
Fig. 3 shows an example welding-type wire tensioning mechanism, in accordance with aspects of this disclosure.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

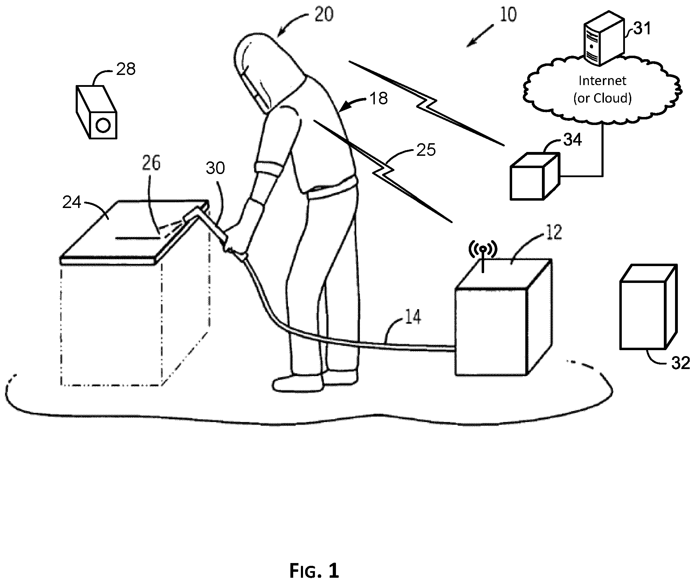

Fig. 1 shows an example welding-type setup that may be used for welding-type operations. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

In some example implementations, welding-type systems or setups, such as the welding-type setup 10, may be configured for collecting and reporting data relating to welding-type operations and/or to functions or components utilized during welding-type operations. For example, data from welding processes, power sources, welding-related accessories etc. in a weld setup may be collected. In this regard, the collected data may comprise, for example, current, voltage, wire feed speed, weld states, and numerous other power source parameters and settings.

The collected data may then be sent to remote entities (e.g., a remote server 31, which may be a manufacturer-controlled, Internet-based cloud server) and/or to local systems or devices (e.g., local PC, a tablet, a smartphone, etc.). The collected data may be utilized in enhancing welding-related systems and/or operations. For example, manufacturers may utilize the collected data to identify issues (and correct them) and/or devise modifications or improvements in the various components. Further, users may be able to generate reports on collected data to measure, document, and improve their processes.

In some instances, it may be desirable to control and/or adjust certain aspects of various functions in welding-type setups, such as the welding-type setup 10 of Fig. 1. For example, as noted the welding-type setup 10 may incorporate a wire feeder that may be used in feeding wire/filler material, and in some instances controlling or adjusting certain aspects or parameters associated with the wire feeding may be desirable. One such aspect or parameter is the tensioning of the wire while being fed during welding-type operations. In this regard, in some implementations, the tensioning of the wire may be controlled, such as by adjusting a force applied on the wire within the wire feeder. Conventional solutions for adjusting tensioning of the wire may have some limitations and/or shortcomings, however.

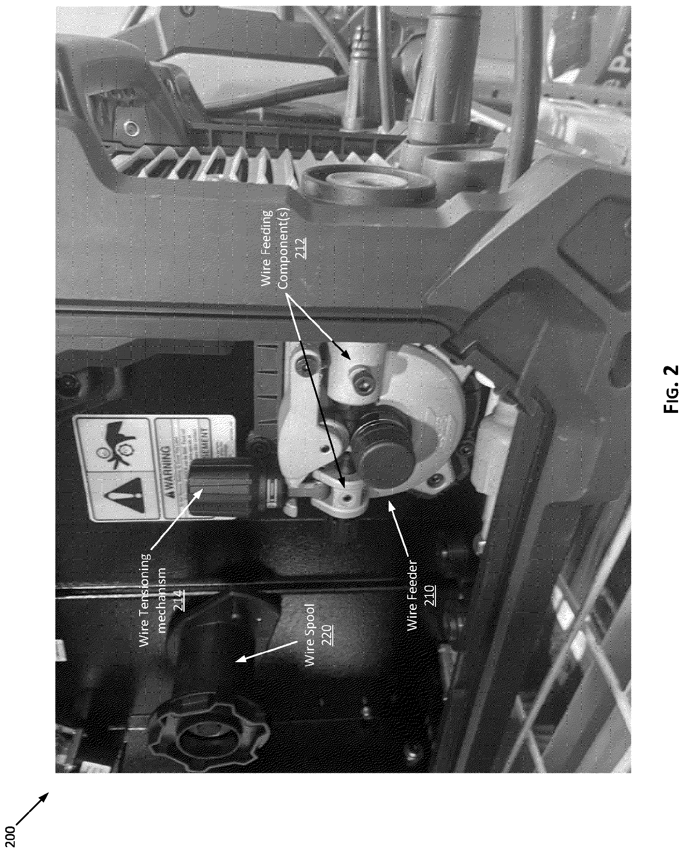

In this regard, in conventional solutions tensioning may be adjusted in very limited manner that may not accommodate wide range of variations in the wire (e.g., with respect to certain characteristics associated therewith, such as type, width, etc.), variations in the in the welding processes that are utilized, etc. Solutions in accordance with the present disclosure overcome at least some of the limitations and/or shortcomings associated with conventional solutions, such as by utilizing improved mechanisms for adjusting tensioning of wires. Such improved mechanisms are described in more detail below, particularly with respect to Figs. 2-5.

In some instances, it may be desirable to control and/or adjust certain aspects of various functions in welding-type setups, such as the welding-type setup 10 of Fig. 1. For example, as noted the welding-type setup 10 may incorporate a wire feeder that may be used in feeding, e.g., electrode wire or the like, during welding operations, controlling or adjusting certain aspects or parameters associated with the wire feeding may be desirable. One such aspect or parameter is the tensioning of the wire while being fed during welding-type operations. In this regard, in some implementations, the tensioning of the wire may be controlled, such as by adjusting a force applied on the wire within the wire feeder. Conventional solutions for adjusting tensioning of the wire may have some limitations and/or shortcomings, however.

In this regard, in conventional solutions tensioning may be adjusted in uncontrolled manner-that is, where the tensioning force applied to the fed wire may be increased and decreased without any applicable limiting thereto. Solutions in accordance with the present disclosure overcome at least some of the issues in conventional solutions, such as by utilizing improved mechanisms for limiting the tensioning of wires during wire feeding. Such improved mechanisms are described in more detail below, particularly with respect to Figs. 2-3.

Fig. 2 shows an example welding-type wire feeding system, in accordance with aspects of this disclosure. Shown in Fig. 2 is a welding-type wire feeding system 200 (or portion thereof).

The wire feeding system 200 may be configured for use in a welding-type system (or setup) for facilitating feeding of electrode wires (e.g., electrode wires) utilized during welding operations. In this regard, the wire feeding system 200 may comprise suitable components for engaging and feeding electrode wire(s). For example, as illustrated in Fig. 2, the wire feeding system 200 may comprise a wire feeder 210 and a wire spool 220. In this regard, the wire spool 220 may comprise suitable physical components for engaging electrode wires, particularly in the form of rolls, and for enable providing the electrode wire therefrom during feeding operations, such as in rotational manner-that is, where the rolls may rotate while the electrode wires is being pulled of the roll. Nonetheless, the disclosure is not limited to use of wire spools that operate in such manner, or even to use of wire spools, and as such any suitable solutions for providing the electrode wire during feeding operations may be used.

The wire feeder 210 may comprise suitable components for enabling feeding of electrode wires, such as from a corresponding electrode wire source (e.g., the wire spool 220 in the wire feeding system 200). In this regard, the wire feeder 210 may comprise wire feeding components 212 (e.g., drive rolls, gears, etc.) for facilitating the feeding of electrode wire(s), which may include obtaining (e.g., pulling) the electrode wires from the electrode wire source on one end, and feeding to a welding-type torch or the like (not show) on the end, such as via suitable connectors.

In some instances, it may be desirable to apply tensioning force to the electrode wire(s). Hence, wire feeders, such as the wire feeding system 200 (or particularly the wire feeder 210), may incorporate one or more tensioning control component(s), which may be configured for applying tensioning force onto the electrode wires while being fed. For example, as illustrated in Fig. 2, the wire feeder 210 incorporates a wire tensioning mechanism 214 configured to apply tensioning force to the electrode wire as it is fed by the wire feeder 210 (form the wire spool 220). In this regard, different designs and/or mechanisms may be used in implementing such wire tensioning mechanisms and/or in effectuating the application of tensioning forces thereby. For example, in some instances, such as in the implementation illustrated in Fig. 2, the wire tensioning mechanism 214 may be implemented as a rotational-based assembly (e.g., a knob-based assembly), with the tensioning forced applied by the wire tensioning mechanism 214 being increased or decreased by rotating a tensioning control element (e.g., a knob as shown in Fig. 2). Nonetheless, the disclosure is not limited to such design, and as such any suitable design may be used and implemented (or modified) based on the present disclosure.

In accordance with the present disclosure, the wire feeding system 200 may be modified to incorporate improved wire tensioning mechanisms for tensioning of the electrode wire(s) during wire feeding operations. In this regard, in systems implemented based on conventional designs (if any existed), the process, and hence the instructions, for adjusting the tension on both the drive-roll system as well as the spool hub is very vague. For example, the tensioning force may be adjusted in uncontrolled manner, with vague indications that may be used in selecting different tensioning settings. For example, the wire feeder, or specifically the wire tensioning mechanism (or the portion thereof), may incorporate markings, visual indicators, or the like to assist the user in adjusting the tensioning force, as illustrated in Fig. 2 (the markings below the knob). Nonetheless, such designs may pose challenges and/or may have notable issues or limitations as they may lead to very subjective settings for one or more critical elements of a welding setup, resulting in wire feeding related challenges. For example, settings used in conventional designs may be actually relative (e.g., in terms of compression of the spring) rather than absolute values (e.g., in terms of tensioning force or pressure applied to the electrode wire). Also, the marking may be too vague (e.g., the lines corresponding to the different settings may be too close to one another), which may result in errors (e.g., based on viewing angle).

Such limitations and/or issues may be particularly challenging to inexperienced users, who may not be able to adjust the tensioning force properly, which may affect performance of welding operations. In this regard, if the tensioning is below required, the electrode wire may not be fed correctly, and if the tensioning is more than required (too much), the electrode wire may be damaged. Similarly, if the tensioning applied at the wire spool (e.g., spool hub tension) is below some required value, the spool may continue to spin even after the welding has stopped resulting in bird's nesting around the spool; and if the spool hub tension is too high, may not allow the feeding components of the wire feeder (e.g., drive rolls) to pull and feed the electrode wire properly, or to over work the wire drive motor resulting is premature failure.

Solutions based on the present disclosure may address some of issues with conventional solutions, particularly by incorporating features that eliminate the subjectivity in the wire tensioning (e.g., based on pre-determined wire tensioning setpoint(s)). For example, in various embodiments, the wire tensioning mechanism may be configured such that when the tensioning force reaches a pre-set setting or value, the setting or adjusting of the tensioning force may be limited-that is, the tensioning force would not be adjusted (increased or decreased) any further even when the user continues to try to adjust the tensioning force by interacting with the wire tensioning mechanism (or some control component therein). For example, in wire tensioning mechanisms with knob based assembly, when the pre-set point is reached, the knob may slip to prevent further increasing (or decreasing) of the tensioning force, if the user continues to rotate the knob.

For example, in various embodiments, the wire tensioning mechanism may be configured such that when the tensioning force reaches a pre-set setting or value, the setting or adjusting of the tensioning force may be limited-that is, the tensioning force would not be adjusted any further even when the user continues to try to adjust the tensioning force by interacting with the wire tensioning mechanism (or some control component therein). In rotational-based assembly (e.g., a knob-based assembly), e.g., when the pre-set setting or value is reached, continued rotating would not result in any further adjustment. This may be done to protect against both over-tensioning and under-tensioning. For example, when an over-tensioning pre-set value is reached, further interaction with wire tensioning mechanism (e.g., continued rotating of the knob in implementation with knob-based assembly) would not result in any further increases to the tensioning force. Similarly, when an under-tensioning pre-set value is reached, further interaction with wire tensioning mechanism (e.g., continued rotating of the knob in implementation with knob-based assembly) would not result in any further decreases to the tensioning force.

The pre-set point may be pre-determined, such as using testing (e.g., by weld and mechanical engineering). This would likely be attained by, e.g., trial and error on a worst-case welding condition. In some instances, the wire tensioning mechanism may be configured to enable the operator to manually override the tension force setting (limiting) mechanism/components if desired. This may be done by various suitable means-e.g., by incorporating an input device (e.g., a button that may be pressed), by modifying the control component of the wire tensioning mechanism to enable such overriding (e.g., where knob based assembly is used, by depressing or pulling on the knob), and/or by use of suitable tool(s) to disable the limiting mechanism/components. As such, solutions based on the present disclosure may overcome issues and/or limitation of any existing conventional solutions, by taking away the guess work and subjectivity of setting up the tensioning (e.g., on both the drive roll assembly and the spool hub assembly), instilling confidence that the welder is set up properly, and ensuring proper feeding irrespective of the skill set of the person setting up the welder.

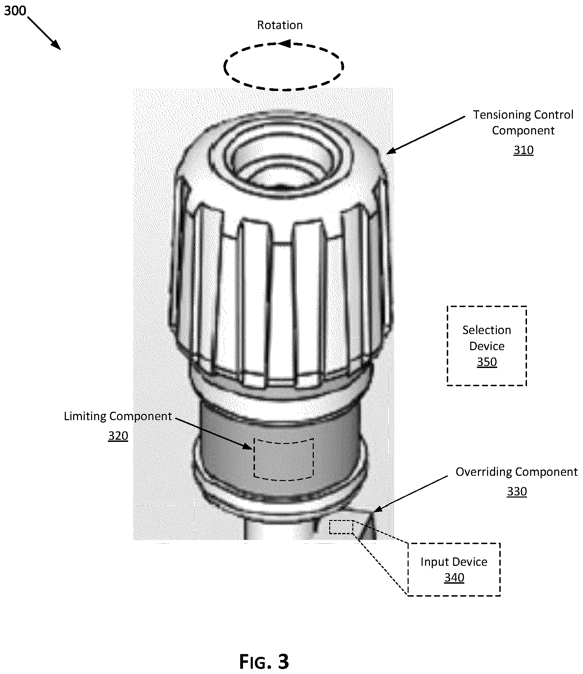

An example embodiment of a wire tensioning mechanism with knob-based assembly with automatic tensioning related features is illustrated in and described in more detail with respect to Fig. 3.

Fig. 3 shows an example welding-type wire tensioning mechanism, in accordance with aspects of this disclosure. Shown in Fig. 3 is a welding-type wire tensioning mechanism 300 (or portion thereof).

The wire feeder tensioning mechanism 300 may comprise suitable components (e.g., mechanical or otherwise) for facilitating wire tensioning in a wire feeder (e.g., the wire feeder 200 of Fig. 2), particularly with automatic tensioning features in accordance with the present disclosure, as described herein. In this regard, the wire tensioning mechanism 300 may represent an example embodiment of the wire tensioning mechanism 214 as described with respect to Fig. 2, and as such may be used in substantially similar manner to apply a tensioning force to an electrode wire as it is fed through a wire feeder comprising the wire feeder tensioning mechanism 300. As such, the wire feeder tensioning mechanism 300 may be configured to enable setting and/or adjusting the tensioning force applied to the electrode wire, and may comprise suitable component for enable such setting and/or adjusting.

For example, the wire tensioning mechanism 300 may comprise a tensioning control component 310, which may be configured to set or adjust the tensioning force applied to the electrode wire. As illustrated in Fig. 3, the tensioning control component 310 may comprise a knob-based assembly. Nonetheless, as noted the disclosure is not limited to such design, and as such any suitable design for setting and/or adjusting the tensioning force may be used. The wire tensioning mechanism 300 may further comprise additional components to facilitate and/or enable providing the automatic tensioning features as described herein.

In this regard, as noted above, conventional designs may have limitations and/or issues when it comes to the applying of the tensioning-namely, where the user may over apply too much tensioning force (which may cause damage to the electrode wire) or apply tensioning force that is below what is required (which may cause the electrode wire to not be fed correctly). In an implementation incorporating a knob-based assembly (or other rotational based design) may be done by, e.g., interacting with the knob-rotating too far, in either direction, resulting in over-tensioning or under-tensioning.

Solutions based on the present disclosure may address such issues, particularly by incorporating features that eliminate the subjectivity in the wire tensioning. In particular, wire tensioning mechanisms based on the present disclosure (such as the wire tensioning mechanism 300) may be configured such that when the tensioning force be set or adjust reaches pre-set setting(s) or value(s), the setting or adjusting of the tensioning force may be limited thereafter-that is, the tensioning force would not be adjusted any further, even when the user continues to try to adjusted the tensioning force by interacting with the wire tensioning mechanism.

For example, in the wire tensioning mechanism 300, when the pre-set setting or value is reached, continued rotating of the knob would not result in any further adjustment. As noted, this may be done to address both the over-tensioning and under-tensioning. For example, an over-tensioning pre-set value may be used, which when reached, further rotating of the knob (as normally done to increase tensioning) would not result in any further increases to the tensioning force. Similarly, an under-tensioning pre-set value may be used, which when reached, further rotating of the knob (as normally done to decrease tensioning) would not result in any further decreases to the tensioning force. The wire tensioning mechanism 300 may be configured, e.g., such that the knob may simply slip when rotated after reaching pre-set value(s).

The pre-set value(s) used in controlling the limiting of the setting or adjusting of the tensioning may be pre-determined, such as based on a type of the welding-type system. In this regard, the pre-determination may be done by use of testing, which may be performed adaptively based on various factors, such as type of the welding-type system, type of the wire feeder (feeding mechanism used therein), type and/or characteristics of the wire, etc.

In various embodiments, wire tensioning mechanisms based on the present disclosure (such as the wire tensioning mechanism 300) may incorporate components to facilitating the limiting of setting or adjusting of tensioning, and/or to allow for additional features associated therewith. For example, in some implementations, wire tensioning mechanisms (e.g., the wire tensioning mechanism 300) may comprise a limiting component 320 configured for enabling the limiting of the setting or adjusting of the tensioning force (e.g., via the tensioning control component 310) after reaching the pre-set value. The limiting component 320 may not necessarily prevent further interactions by the user onto the tensioning control component, but may simply prevent such interactions from causing any further changes. For example, the limiting component 320 may be configured to disengage or disconnect the tensioning control component 310 (from wire feeding components), thus preventing further adjustments. In knob-based implementation (e.g., the wire tensioning mechanism 300) the limiting component 320 may be configured to limit the setting or adjusting of the tensioning force by causing the knob to slip after reaching the pre-set value.

In some implementations, wire tensioning mechanisms (e.g., the wire tensioning mechanism 300) may comprise an overriding component 330 configured for enabling overriding the limiting of the setting or adjusting of the tensioning force (e.g., via the tensioning control component 310). The overriding may be done in response to user input. In this regard, in some instances the user input may entail use of suitable tool(s), to facilitating the overriding. However, the disclosure is not limited to implementation requiring use of tools. In instances where limiting the setting or adjusting of the tensioning entails particular actions (e.g., disengaging or disconnecting the tensioning control component 310 from wire feeding components), the overriding component 330 may be configured to undo or counteract such actions (e.g., re-engaging or re-connecting the tensioning control component 310 to the wire feeding components). In knob-based implementation (e.g., the wire tensioning mechanism 300) the overriding component 330 may be configured to limit the setting or adjusting of the tensioning force by causing the knob to slip after reaching the pre-set value. In this regard, overriding component 330 may comprise an internal slip mechanism built into the knob-based assembly, to ensure consistent tension every time.

In some implementations, wire tensioning mechanisms (e.g., the wire tensioning mechanism 300) may comprise an input device 340 for enabling user input, such as for triggering the overriding of the limiting of the setting or adjusting of the tensioning force. For example, the input device 340 may comprise a button-based assembly configure to trigger the overriding. Alternatively, in some implementations, wire tensioning mechanisms (e.g., the wire tensioning mechanism 300) may be configured such that the overriding may be triggered in response to a particular action by the user, such as on the tensioning control component 310. For example, in knob-based implementation (e.g., the wire tensioning mechanism 300) the overriding of the limiting of the setting or adjusting of the tensioning force may be triggered in response to user interaction with the knob. In this regard, the user interaction may comprise depressing (pushing down) or pulling up the knob.

In some implementations, wire tensioning mechanisms (e.g., the wire tensioning mechanism 300) may be configured to provide feedback to indicate when limiting the setting or adjusting of the tensioning force. The feedback may comprise, e.g., one or more of audible feedback, visual feedback, or haptic feedback. For example, in knob-based implementation (e.g., the wire tensioning mechanism 300), providing the feedback may comprise generating a clicking sound by the knob based assembly in response to continued rotating of the knob after the tensioning force reaches a pre-set value.

In some implementations, one or more of the pre-set value(s) may be adjustable. In this regard, wire tensioning mechanisms (e.g., the wire tensioning mechanism 300) may be configured to enable adjusting the pre-set value(s), such as in response to user input. For example, a pre-set value may be selected from a plurality of pre-set values. In this regard, in some implementations, wire tensioning mechanisms (e.g., the wire tensioning mechanism 300) may comprise a selection device 350 configured for enabling selecting the pre-set value from the plurality of pre-set values. The selection device may be incorporated into the wire tensioning mechanism itself, or alternatively may be separate from it (e.g., stand-along device, incorporated into another component or subsystem in the welding setup, etc.). The disclosure is not limited to any particular type of selection devices, and any suitable device may be used.

As such, solutions based on the present disclosure may allow for consistently set the machine to the 'recommended' tension irrespective of experience/skill level, may decreased probability of the electrode wire slipping due to too low of a setting, may decreased probability of electrode wire being crushed due to too high of a setting, and/or may support overriding the limiting of tensioning force adjustment (e.g., when users are sufficiently experience to know what they're doing).

An example welding-type system, in accordance with present disclosure, comprises a wire feeder comprising: one or more wire feeding components configured to feed an electrode wire; and a wire tensioning mechanism configured to apply a tensioning force to the electrode wire during feeding of the electrode wire via the wire feeder; wherein the wire tensioning mechanism comprises at least one tensioning control component for enabling setting or adjusting the tensioning force; and wherein the wire tensioning mechanism is configured to, after the tensioning force reaches a pre-set value, limit the setting or adjusting the tensioning force via the at least one tensioning control component to the pre-set value. In this regard, the pre-set value may correspond to a limit on either end of the tensioning range-that is, to limit (and thus protect against) over-tensioning or limit under-tensioning. The pre-set value may be a factory setting, or may be pre-determined after manufacturing (e.g., by the user or someone else). Further, as used herein, "limiting" may not necessarily entail that the user would not be able to apply input for attempting to adjust the tensioning force; rather, it merely indicates that no further adjustment would occur-e.g., in knob based implementations, after reaching the pre-set value, the user may still try to adjust the tensioning (by rotating the knob), but there would be no actual adjustment-e.g., due to slippage.

In an example embodiment, the wire tensioning mechanism comprises one or more limiting components configured for limiting the setting or adjusting the tensioning force via the at least one tensioning control component after reaching the pre-set value.

In an example embodiment, at least one of the one or more limiting components is configured to disengage or disconnect the at least one tensioning control component from the one or more wire feeding components.

In an example embodiment, the at least one tensioning control component comprises a knob based assembly.

In an example embodiment, the wire tensioning mechanism is configured to limit the setting or adjusting the tensioning force by causing the knob to slip after reaching the pre-set value.

In an example embodiment, the wire tensioning mechanism is configured to enable overriding the limiting of the setting or adjusting of the tensioning force via the at least one tensioning control component.

In an example embodiment, the wire tensioning mechanism is configured to enable the overriding of the limiting of the setting or adjusting of the tensioning force in response to user input. In this regard, in some instances user input may include and/or entail use of suitable tool(s), to facilitating the overriding.

In an example embodiment, wherein the wire tensioning mechanism comprises one or more overriding components configured for re-enabling the setting or adjusting of the tensioning force via the at least one tensioning control component.

In an example embodiment, wherein at least one of the one or more overriding components is configured to re-engage or re-connect the at least one tensioning control component to the one or more wire feeding components.

In an example embodiment, wherein the one or more overriding components comprise at least one input device for enabling user input for triggering the overriding of the limiting of the setting or adjusting of the tensioning force.

In an example embodiment, wherein the at least one tensioning control component comprises a knob based assembly, and wherein the wire tensioning mechanism is configured to enable the overriding of the limiting of the setting or adjusting of the tensioning force in response to user interaction with the knob.

In an example embodiment, wherein the user interaction comprises depressing or pulling the knob.

In an example embodiment, wherein the pre-set value is pre-determined based on a type of the welding-type system. In this regard, the pre-determination may be done by use of testing, which may be performed adaptively based on various factors, such as type of the welding-type system, type of the wire feeder (feeding mechanism used therein), type and/or characteristics of the wire, etc.

In an example embodiment, the pre-set value is adjustable.

In an example embodiment, the wire tensioning mechanism is configured to enable adjusting the pre-set value in response to user input.

In an example embodiment, the wire tensioning mechanism is configured to provide feedback to indicate when limiting the setting or adjusting of the tensioning force.

In an example embodiment, the feedback comprises one or more of audible feedback, visual feedback, or haptic feedback.

In an example embodiment, the at least one tensioning control component comprises a knob based assembly, and wherein providing the feedback comprises generating a clicking sound by the knob based assembly after the tensioning force reaches the pre-set value.

In an example embodiment, the pre-set value is selected from a plurality of pre-set values.

In an example embodiment, the wire feeder comprises a selection device configured for enabling selecting the pre-set value from the plurality of pre-set values. In this regard, the selection device may be incorporated into the wire tensioning mechanism or be separate from it. Further, the disclosure is not limited to any particular type of selection devices, and any suitable device may be used.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application-specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:
Clause 1. A welding-type system, comprising:
   a wire feeder comprising:
   one or more wire feeding components configured to feed an electrode wire; and
   a wire tensioning mechanism configured to apply a tensioning force to the electrode wire during feeding of the electrode wire via the wire feeder;
   wherein the wire tensioning mechanism comprises at least one tensioning control component for enabling setting or adjusting the tensioning force; and
   wherein the wire tensioning mechanism is configured to, after the tensioning force reaches a pre-set value, limit the setting or adjusting the tensioning force via the at least one tensioning control component to the pre-set value.
Clause 2. The welding-type system according to clause 1, wherein the wire tensioning mechanism comprises one or more limiting components configured for limiting the setting or adjusting the tensioning force via the at least one tensioning control component after reaching the pre-set value.
Clause 3. The welding-type system according to clause 2, wherein at least one of the one or more limiting components is configured to disengage or disconnect the at least one tensioning control component from the one or more wire feeding components.
Clause 4. The welding-type system according to clause 1, wherein the at least one tensioning control component comprises a knob based assembly.
Clause 5. The welding-type system according to clause 4, wherein the wire tensioning mechanism is configured to limit the setting or adjusting the tensioning force by causing the knob to slip after reaching the pre-set value.
Clause 6. The welding-type system according to clause 1, wherein the wire tensioning mechanism is configured to enable overriding the limiting of the setting or adjusting of the tensioning force via the at least one tensioning control component.
Clause 7. The welding-type system according to clause 6, wherein the wire tensioning mechanism is configured to enable the overriding of the limiting of the setting or adjusting of the tensioning force in response to user input.
Clause 8. The welding-type system according to clause 6, wherein the wire tensioning mechanism comprises one or more overriding components configured for re-enabling the setting or adjusting of the tensioning force via the at least one tensioning control component.
Clause 9. The welding-type system according to clause 8, wherein at least one of the one or more overriding components is configured to re-engage or re-connect the at least one tensioning control component to the one or more wire feeding components.
Clause 10. The welding-type system according to clause 8, wherein the one or more overriding components comprise at least one input device for enabling user input for triggering the overriding of the limiting of the setting or adjusting of the tensioning force.
Clause 11. The welding-type system according to clause 6, wherein the at least one tensioning control component comprises a knob based assembly, and wherein the wire tensioning mechanism is configured to enable the overriding of the limiting of the setting or adjusting of the tensioning force in response to user interaction with the knob.
Clause 12. The welding-type system according to clause 11, wherein the user interaction comprises depressing or pulling the knob.
Clause 13. The welding-type system according to clause 1, wherein the pre-set value is pre-determined based on a type of the welding-type system.
Clause 14. The welding-type system according to clause 1, wherein the pre-set value is adjustable.
Clause 15. The welding-type system according to clause 14, wherein the wire tensioning mechanism is configured to enable adjusting the pre-set value in response to user input.
Clause 16. The welding-type system according to clause 1, wherein the wire tensioning mechanism is configured to provide feedback to indicate when limiting the setting or adjusting of the tensioning force.
Clause 17. The welding-type system according to clause 16, wherein the feedback comprises one or more of audible feedback, visual feedback, or haptic feedback.
Clause 18. The welding-type system according to clause 16, wherein the at least one tensioning control component comprises a knob based assembly, and wherein providing the feedback comprises generating a clicking sound by the knob based assembly after the tensioning force reaches the pre-set value.
Clause 19. The welding-type system according to clause 1, wherein the pre-set value is selected from a plurality of pre-set values.
Clause 20. The welding-type system according to clause 19, wherein the wire feeder comprises a selection device configured for enabling selecting the pre-set value from the plurality of pre-set values.

## Claims

1. A welding-type system, comprising:
a wire feeder comprising:
one or more wire feeding components configured to feed an electrode wire; and
a wire tensioning mechanism configured to apply a tensioning force to the electrode wire during feeding of the electrode wire via the wire feeder;
wherein the wire tensioning mechanism comprises at least one tensioning control component for enabling setting or adjusting the tensioning force; and
wherein the wire tensioning mechanism is configured to, after the tensioning force reaches a pre-set value, limit the setting or adjusting the tensioning force via the at least one tensioning control component to the pre-set value.

2. The welding-type system according to claim 1, wherein the wire tensioning mechanism comprises one or more limiting components configured for limiting the setting or adjusting the tensioning force via the at least one tensioning control component after reaching the pre-set value, and optionally wherein at least one of the one or more limiting components is configured to disengage or disconnect the at least one tensioning control component from the one or more wire feeding components.

3. The welding-type system according to claim 1, wherein the at least one tensioning control component comprises a knob based assembly, and optionally wherein the wire tensioning mechanism is configured to limit the setting or adjusting the tensioning force by causing the knob to slip after reaching the pre-set value.

4. The welding-type system according to claim 1, wherein the wire tensioning mechanism is configured to enable overriding the limiting of the setting or adjusting of the tensioning force via the at least one tensioning control component.

5. The welding-type system according to claim 4, wherein the wire tensioning mechanism is configured to enable the overriding of the limiting of the setting or adjusting of the tensioning force in response to user input.

6. The welding-type system according to claim 4, wherein the wire tensioning mechanism comprises one or more overriding components configured for re-enabling the setting or adjusting of the tensioning force via the at least one tensioning control component.

7. The welding-type system according to claim 6, wherein at least one of the one or more overriding components is configured to re-engage or re-connect the at least one tensioning control component to the one or more wire feeding components.

8. The welding-type system according to claim 6, wherein the one or more overriding components comprise at least one input device for enabling user input for triggering the overriding of the limiting of the setting or adjusting of the tensioning force.

9. The welding-type system according to claim 4, wherein the at least one tensioning control component comprises a knob based assembly, and wherein the wire tensioning mechanism is configured to enable the overriding of the limiting of the setting or adjusting of the tensioning force in response to user interaction with the knob, and optionally wherein the user interaction comprises depressing or pulling the knob.

10. The welding-type system according to claim 1, wherein the pre-set value is pre-determined based on a type of the welding-type system.

11. The welding-type system according to claim 1, wherein the pre-set value is adjustable, and optionally wherein the wire tensioning mechanism is configured to enable adjusting the pre-set value in response to user input.

12. The welding-type system according to claim 1, wherein the wire tensioning mechanism is configured to provide feedback to indicate when limiting the setting or adjusting of the tensioning force.

13. The welding-type system according to claim 12, wherein the feedback comprises one or more of audible feedback, visual feedback, or haptic feedback.

14. The welding-type system according to claim 12, wherein the at least one tensioning control component comprises a knob based assembly, and wherein providing the feedback comprises generating a clicking sound by the knob based assembly after the tensioning force reaches the pre-set value.

15. The welding-type system according to claim 1, wherein the pre-set value is selected from a plurality of pre-set values, and optionally wherein the wire feeder comprises a selection device configured for enabling selecting the pre-set value from the plurality of pre-set values.
